# EUROPÄISCHE PATENTSCHRIFT

(11) **EP 0 973 631 B1**
(45) Veröffentlichungstag und Bekanntmachung des Hinweises auf die Patenterteilung: **04.05.2005**
(21) Anmeldenummer: 97951176.3
(22) Anmeldetag: 12.11.1997
(51) Int. Cl.: B25J 9/08

(54) **HANDHABUNGSEINRICHTUNG**
HANDLING DEVICE
DISPOSITIF DE MANIPULATION

(30) Priorität: 27.03.1997 DE 19712956
(43) Veröffentlichungstag der Anmeldung: 26.01.2000
(73) Patentinhaber: Schunk GmbH & Co. KG Fabrik für Spann- und Greifwerkzeuge, 74348 Lauffen (DE)
(72) Erfinder: MICHLER, Gerhard, D-74360 Ilsfeld (DE); SCHUSTER, Andreas, D-71543 Wüstenrot (DE); SCHNEIDER, Michael, D-70806 Kornwestheim (DE)
(74) Vertreter: Dreiss, Fuhlendorf, Steimle & Becker
(86) Internationale Anmeldenummer: PCT/EP1997/006304
(87) Internationale Veröffentlichungsnummer: WO 1998/043783

(56) Entgegenhaltungen:
- EP-A- 0 477 725
- DE-A- 4 431 842
- FR-A- 2 632 561
- FR-A- 2 657 286
- US-A- 5 293 107

## Beschreibung

Die Erfindung betrifft eine Handhabungseinrichtung mit mehreren Handhabungsmodulen, wie Greif-, Hub- oder Schwenkmodulen, mit den Merkmalen des Oberbegriffs des Anspruchs 1. Eine derartige Einrichtung ist bekannt aus FR-A-2 657 286.

Eine derartige Handhabungseinrichtung weist zumeist ein Greifmodul mit einem ansich beliebigen Greifer, insbesondere Parallelgreifer, Winkelgreifer, etc. auf, mit dem beliebige Bauteile oder Werkstücke gegriffen und durch Zusammenwirken mit einem das Greifmodul steuernden weiteren Modul im weitesten Sinne gehandhabt werden, also gegriffen, abgehoben, translatorisch verlagert, verschwenkt und/oder in beliebiger Weise wieder abgelegt werden. Bei dem werkstückzugewandten Modul kann es sich aber beispielsweise auch um ein Ansaugmodul handeln.

Die einzelnen Module werden seither durch Verschrauben einzelner Komponenten miteinander verbunden. So ist es beispielsweise bekannt und üblich, eine bezüglich einem Gehäusekörper heb- und senkbare Anschlussplatte eines Hubmoduls an einem Gehäuse eines Schwenkmoduls lösbar festzuschrauben.
Das Schwenkmodul kann dann durch die Hubbewegung des Hubmoduls translatorisch bewegt werden. Das Schwenkmodul besitzt seinerseits eine bezüglich eines Gehäusekörpers schwenkbare Anschlussplatte, die mit einem Gehäusekörper eines Greifmoduls verschraubt werden kann. Eine derart aufgebaute Handhabungseinrichtung vermag also das werkstückzugewandte Greifmodul um eine Achse zu verdrehen und in Hubrichtung des Hubmoduls translatorisch zu verlagern. Es versteht sich, dass durch unterschiedliche Gestaltung und Kombination von Handhabungsmodulen eine Vielzahl von Handhabungseinrichtungen hergestellt werden können.

Bei den bekannten Handhabungseinrichtungen erweist es sich jedoch als nachteilig, dass das Verbinden und Lösen der einzelnen Handhabungsmodule sehr zeitraubend und zudem umständlich ist.

Der vorliegenden Erfindung liegt daher die Aufgabe zugrunde, eine Handhabungseinrichtung der genannten Art erfindungsgemäß so zu verbessern, dass die einzelnen Handhabungsmodule leichter miteinander verbunden bzw. voneinander gelöst werden können.

Diese Aufgabe wird bei einer Handhabungseinrichtung mit den Merkmalen des Anspruchs 1 gelöst.

Mit der Erfindung wird also vorgeschlagen, von einer Schraubverbindung zwischen den Modulen Abstand zu nehmen und stattdessen ein in der vorstehend beschriebenen Weise montierbares antriebsloses Kopplungselement vorzusehen.

Aus der EP-A-0 743 143 werden zum Verbinden von Modulen an den Modulen drehbare Flanschteile vorgesehen, die miteinander steckbar und über federbelastete Klemmhebel sicherbar sind. Antriebs- und getriebelose Kopplungselemente, die als Zwischenbauteile an den jeweiligen miteinander zu verbindenden Modulen lösbar sind, sind nicht offenbart. Entsprechendes lehrt die EP-A-0 477 725.

Es erweist sich als vorteilhaft, dass das Kopplungselement an beiden Modulen, die es verbindet, in der erfindungsgemäßen Weise schnappend, rastend und hintergreifend montierbar ist.

In bevorzugter Ausführung bildet die Verbindungsvorrichtung einen Steckmechanismus, so dass das Kopplungselement in Montagerichtung steckbar ist, wodurch die schnappende, rastende und hintergreifende Verbindung zustande kommt. Dies erweist sich als besonders vorteilhaft, da die verschiedenen Handhabungsmodule sehr platzsparend montiert werden können.

In Weiterbildung dieses Erfindungsgedankens sind in Montagerichtung erstreckte Rasthaken an dem Kopplungselement oder einem Modul vorgesehen, die mit einem hintergreifbaren Bereich an dem jeweils anderen Teil in Hintergriffsstellung bringbar sind. Durch das Zusammenfügen der Module bzw. des Kopplungselements und einem Modul werden die Rasthaken ausgelenkt, um wenig später in ihre Hintergriffsstellung schnappen zu können.

In bevorzugter Weise sind die Rasthaken an dem Kopplungselement vorgesehen, bei dem es sich vorzugsweise um ein plattenförmiges, aus Kunststoff bestehendes Spritzgussteil handelt. Sie erstrecken sich dann in entgegengesetzte Richtungen auf die miteinander zu verbindenden Module hin. Erfindungsgemäß wird also ein Kopplungselement zunächst an einem der Module befestigt, und im Anschluss hieran wird dieses Modul zusammen mit dem Kopplungselement an ein anderes Modul angesteckt.

Eine besonders stabile spielfreie Halterung der Module aneinander ergibt sich, wenn die erwähnten Rasthaken leistenförmig sind und sich im wesentlichen über die gesamte Breite des Kopplungselements erstrecken. Der Rasthaken kann aber auch geteilt sein, um die zum Auslenken benötigte Kraft zu reduzieren. Auf diese Weise kann eine bestimmte Nachgiebigkeit der Rasthaken und somit eine erwünschte Montagekraft eingestellt werden.

In besonders bevorzugter Weiterbildung der Erfindung von besonderer Bedeutung sind zusätzliche Fixiermittel vorgesehen, die eine Verdrehsicherung zwischen dem Kopplungselement und einem Modul bilden, die verhindert, dass zwei zusammengefügte Module beispielsweise um ihre Montagerichtung verdrehbar sind.

Wenn eine derartige Verdrehsicherung durch zusätzliche Fixiermittel gebildet wird, so bringt dies den Verteil mit sich, dass diejenigen Komponenten, welche die Schnapp-, Rast- bzw. Hintergriffsverbindung bilden, keine Verdreh- oder Verwindungskräfte aufzunehmen brauchen.

Die Verdrehsicherung kann in besonders einfacher und daher vorteilhafter Weise von wenigstens einem in Montagerichtung bzw. Steckrichtung erstreckten Vorsprung und einer in entsprechender Stelle vorgesehenen Ausnehmung, in welche der Vorsprung eingreift, gebildet sein.

Es erweist sich auch als zweckmäßig, wenn in dem Kopplungselement und in dem Modul zusätzlich Schraubendurchgangsöffnungen und Gewindeöffnungen vorgesehen sind, um eine Kompatibilität zwischen erfindungsgemäßen und bekannten Modulen zu schaffen. Desweiteren erweist es sich als vorteilhaft, wenn in einem jeweiligen Kopplungselement ansich beliebige Durchgangsöffnungen für Leitungen, Durchführungen oder dergleichen ausgebildet sind.

Weitere Merkmale, Einzelheiten und Vorteile der Erfindung ergeben sich aus der zeichnerischen Darstellung und nachfolgenden Beschreibung einer bevorzugten Ausführungsform einer erfindungsgemäßen Handhabungseinrichtung. In der Zeichnung zeigt:
- Figur 1: eine perspektivische Ansicht einer erfindungsgemäßen Handhabungseinrichtung;
- Figur 2: eine perspektivische Ansicht eines Hubmoduls der Handhabungseinrichtung nach Figur 1;
- Figur 3: eine teilweise aufgerissene Darstellung des Hubmoduls nach Figur 2;
- Figur 4: eine perspektivische Ansicht eines Schwenkmoduls der Handhabungseinrichtung nach Figur 1;
- Figur 5: eine teilweise aufgerissene Darstellung des Schwenkmoduls nach Figur 4;
- Figur 6: eine perspektivische Ansicht eines Greifmoduls der Handhabungseinrichtung nach Figur 1;
- Figur 7: eine teilweise aufgerissene Darstellung des Greifmoduls nach Figur 6;
- Figur 8: eine perspektivische Ansicht eines Kopplungselements zum Verbinden des Hubmoduls nach Figur 2 mit dem Schwenkmodul nach Figur 4; und
- Figur 9: zwei perspektivische Ansichten eines weiteren Kopplungselements zum Verbinden des Schwenkmoduls nach Figur 4 mit dem Greifmodul nach Figur 6.

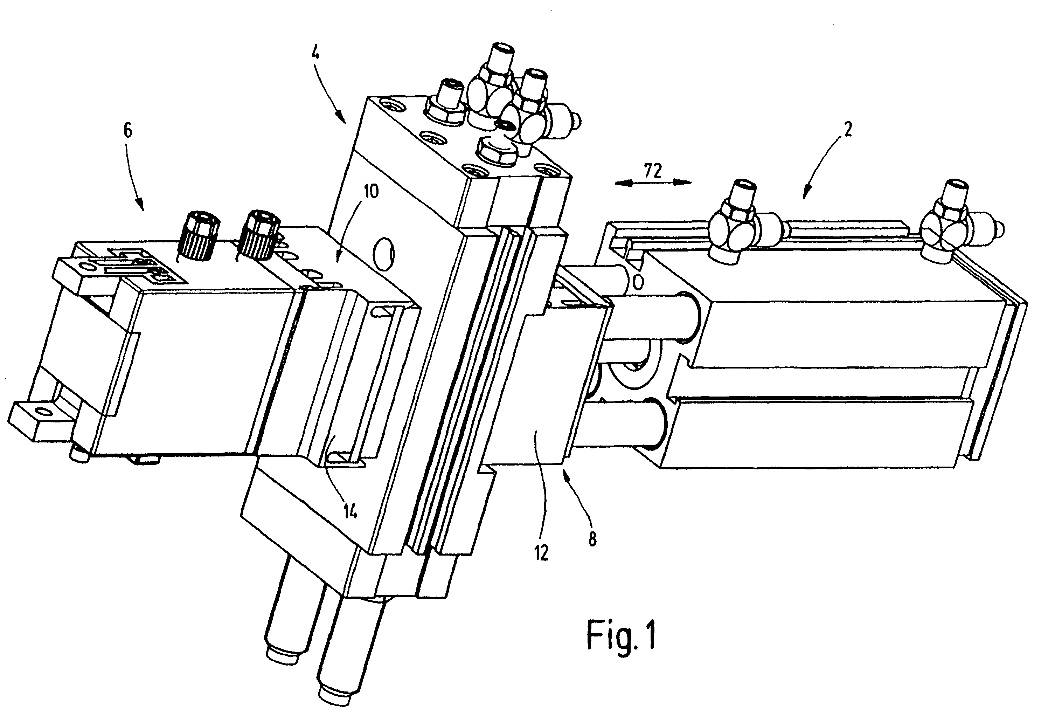

Figur 1 zeigt eine Handhabungseinrichtung aus mehreren Handhabungsmodulen, und zwar einem Hubmodul 2, einem Schwenkmodul 4 und einem Greifmodul 6, wobei das Hubmodul 2 und das Schwenkmodul 4 über eine Verbindungsvorrichtung 8 und das Schwenkmodul 4 und das Greifmodul 6 über eine Verbindungsvorrichtung 10 lösbar miteinander verbunden sind. Die Verbindungsvorrichtungen 8, 10 umfassen ein noch näher zu beschreibendes plattenförmiges Kopplungselement 12, 14, bei dem es sich um ein spritzgegossenes Kunststoffteil handelt. Das jeweilige Kopplungselement 12, 14 ist schnappend, rastend und hintergreifend an den jeweils zwei Modulen, die es verbindet, montiert.

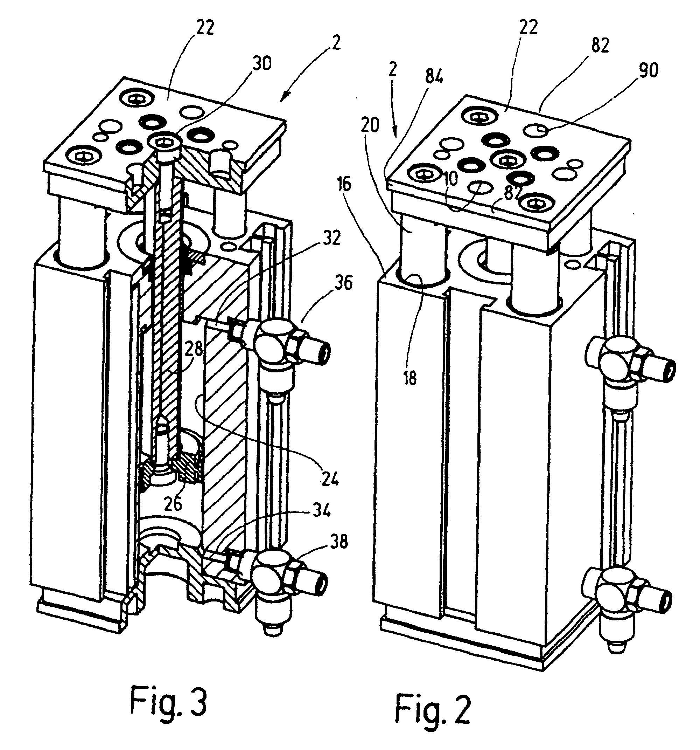

Der Aufbau der Module 2, 4, 6 und der Verbindungsvorrichtungen 8, 10 sind aus den Figuren 2 bis 9 im einzelnen ersichtlich.

In den Figuren 2 und 3 ist das Hubmodul 2 dargestellt. Es umfasst einen Gehäusekörper 16, in dem drei zylindrische Ausnehmungen 18 zur Aufnahme je einer Führungsstange 20 ausgebildet sind. An der freien Stirnseite einer jeweiligen aus dem Gehäusekörper 16 ragenden Führungsstange 20 ist eine Anschlussplatte 22 festgeschraubt.

Im Inneren des quaderförmigen Gehäusekörpers 16 ist ein in Hubrichtung erstreckter Zylinderraum 24 ausgebildet, in dem ein Hubkolben 26 in Hubrichtung bewegbar ist. Der Hubkolben 26 ist über eine Kolbenstange 28 mit der Anschlussplatte 22 über eine in seine Stirnseite eingeschraubte Schraube 30 verbunden. In den beiden Endbereichen des Zylinderraums 24 mündet je eine den Gehäusekörper 16 durchdringende Querbohrung 32 bzw. 34, die zu einem Druckmittelanschluss 36 bzw. 38 außerhalb des Gehäusekörpers 16 führt. Wie leicht zu ersehen ist, kann durch Druckmittelbeaufschlagung des Zylinderraums 24 der Hubkolben 26 und damit die Anschlussplatte 22 in Hubrichtung hin- und herbewegt werden.

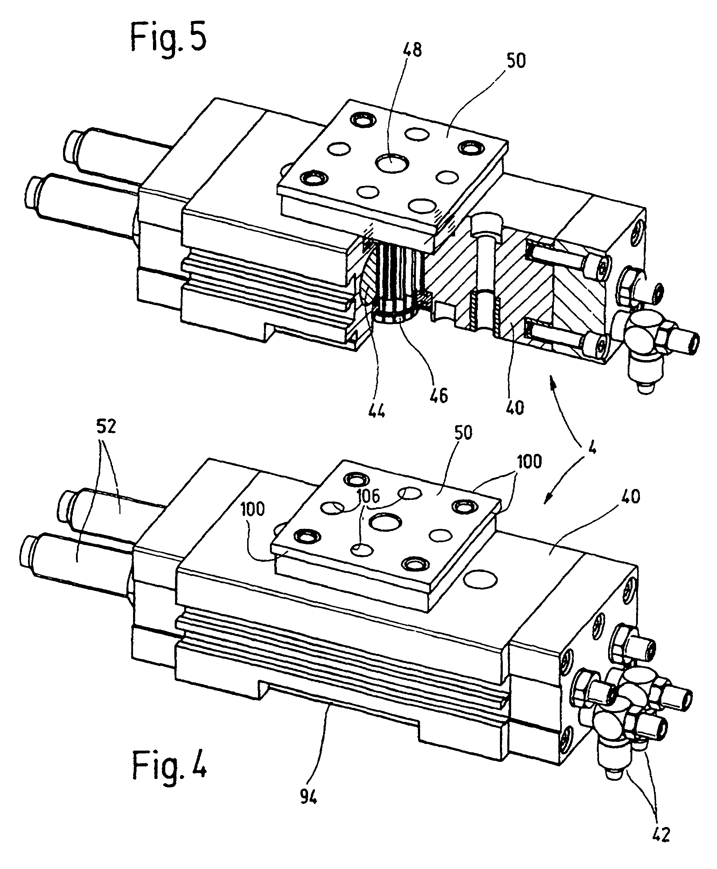

In den Figuren 4 und 5 ist das Schwenkmodul 4 im einzelnen dargestellt. Es umfasst einen Gehäusekörper 40 mit aus der Figur 4 ersichtlichen Druckmittelanschlüssen 42, die in zwei Zylinderräume münden, in denen je ein Kolben hin- und herverschiebbar ist. Jeder Kolben ist mit einer als Zahnstange ausgebildeten Kolbenstange 44 verbunden, die jeweils mit einem Ritzel 46 kämmt. Das Ritzel 46 ist über eine Welle 48 drehfest mit einer Anschlussplatte 50 verbunden. Bei Bewegen der Kolben in den Zylinderräumen wird das Ritzel 46 und damit die Ritzelwelle 48 und die Anschlussplatte 50 über die Zahnstangen 44 rotierend angetrieben. Die Bezugszeichen 52 bezeichnen Stoßdämpfer für die Kolbenstangen 44.

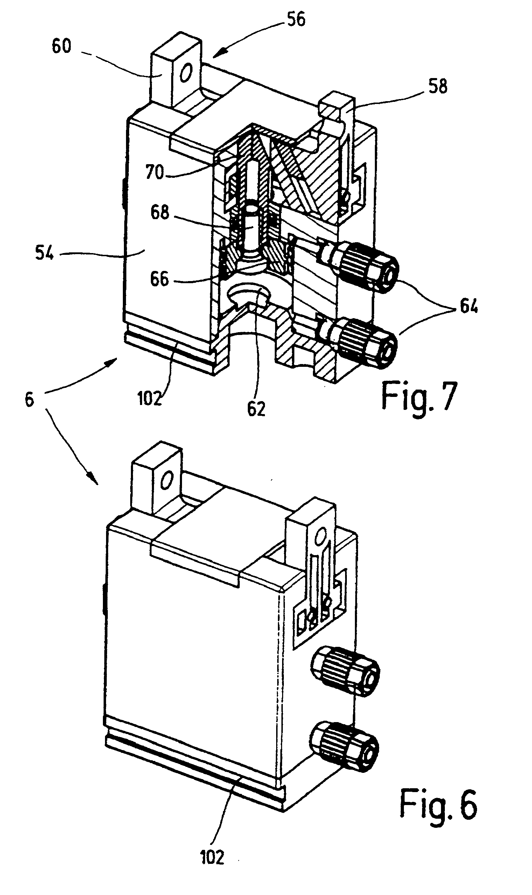

Die Figuren 6 und 7 zeigen das Greifmodul 6 im einzelnen. Es umfasst einen Gehäusekörper 54, der eine Parallelgreifeinrichtung 56 mit zwei aufeinander zu bzw. voneinander weg bewegbaren Grundbacken 58, 60 beherbergt, an denen Greiferfinger montierbar sind. Auch hier sind in einen Zylinderraum 62 mündende Druckmittelanschlüsse 64 vorgesehen. Ein im Zylinderraum 62 bewegbarer Kolben 66 ist über eine Kolbenstange 68 mit einem keilförmige Mitnehmerschrägen aufweisenden Steuermittel 70 verbunden, welches mit den Grundbacken 58, 60 derart zusammenwirkt, dass diese bei nach oben Bewegen des Steuermittels 70 voneinander weg und bei nach unten Bewegen des Steuermittels 70 aufeinander zu bewegbar sind.

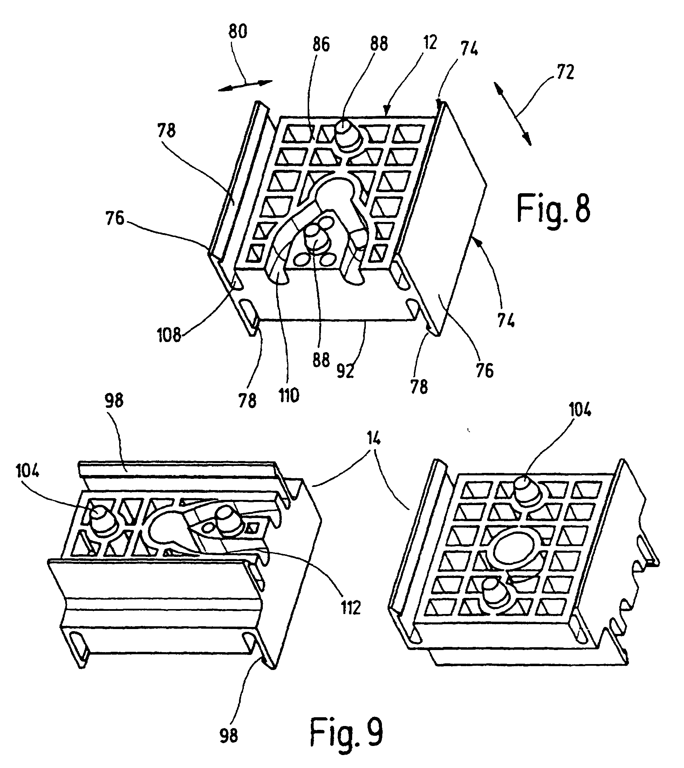

Das Hubmodul 2 und das Schwenkmodul 4 sind, wie aus der Figur 1 ersichtlich, über das in Figur 8 im einzelnen dargestellte Kopplungselement 12 lösbar miteinander verbunden. Das als Spritzgußteil aus Kunststoff hergestellte Kopplungselement 12 ist im wesentlichen platten- oder quaderförmig und umfasst in Montagerichtung 72 erstreckte Hintergriffselemente 74 in Form von Rasthaken 76. Die Rasthaken 76 erstrecken sich über die gesamte Breite des Kopplungselements 12. Die Rasthaken 76 weisen eine dem jeweiligen Modul 2, 4 zugewandte Anlaufschräge 78 auf und sind beim Zusammenstecken von Kopplungselement 12 und Modul 2, 4 quer zur Montagerichtung 72 auslenkbar, was durch den Doppelpfeil 80 angedeutet ist. Wenn zum Beispiel das Hubmodul 2 mit seiner Anschlussplatte 22 gegen das Kopplungselement 12 gedrückt wird, so laufen die einander gegenüberliegenden Längskanten 82 (Figur 2) der Anschlussplatte 22 gegen die Auflaufschrägen 78 an und lenken die Rasthaken 76 in Richtung des Pfeils 80 nach außen aus. Die Anschlussplatte 22 des Hubmoduls 2 ist mit einem nach außen kragenden, eine Stufe bildenden Randabschnitt 84 (Figur 2) ausgebildet, der von den Rasthaken 76 hintergreifbar ist. Die Rasthaken 76 schnappen oder rasten hinter dieser Stufe ein, so dass das Kopplungselement 12 an der Anschlussplatte 22 montiert ist.

Das Kopplungselement 12 weist an der zwischen den Hintergriffselementen 74 bzw. Rasthaken 76 gelegenen Seite 86 stiftförmige Vorsprünge 88 auf, welche beim Zusammenstecken bzw. Aufrasten des Kopplungselements 12 auf der Anschlussplatte 22 in an entsprechender Stelle vorgesehene Ausnehmungen 90 (Figur 2) eingreifen. Über diese Vorsprünge 88 und Ausnehmungen 90 werden Schwenk- bzw. Torsionskräfte zwischen der Anschlussplatte 22 und dem Kopplungselement 22 übertragen, ohne dass die Rasthaken 76 hierdurch belastet werden.

Mit seiner von der Seite 86 abgewandten Seite 92 wird das Kopplungselement 12 auf das Schwenkmodul 4 aufgeklipst oder aufgerastet. Wie aus der Figur 4 ersichtlich ist, weist das Schwenkmodul 4 einen von den Rasthaken 76 hintergreifbaren Abschnitt 94 auf.

In entsprechender Weise ist das Schwenkmodul 4 über das in Figur 9 in zwei Ansichten dargestellte Kopplungselement 14 mit dem Greifmodul 6 verbunden. Beim Kopplungselement 14 sind wiederum Rasthaken 98 über die gesamte Breice des Kopplungselements 14 vorgesehen. Die dem Schwenkmodul 4 zugewandten Rasthaken 98 verlaufen dabei senkrecht zu den dem Greifmodul 6 zugewandten Rasthaken 98. Die Anschlussplatte 50 des Schwenkmoduls 4 weist ebenso wie die Anschlussplatte 22 des Hubmoduls 2 überstehende Randabschnitte 100 auf, die von den Rasthaken 98 in der vorstehend beschriebenen Weise hintergreifbar sind. Wie aus den Figuren 6 und 7 ersichtlich ist, sind an einem bodenseitigen Abschnitt des Gehäusekörpers 54 des Greifmoduls 6 auf gegenüberliegenden Seiten in Längsrichtung erstreckte Nuten 102 vorgesehen, deren eine Nutflanke von den Rasthaken 98 hintergreifbar ist. Wiederum sind stiftförmige Vorsprünge 104 an dem Kopplungselement 14 vorgesehen, welche in an entsprechender Stelle vorgesehene Ausnehmungen 106 in der Anschlussplatte 50 des Schwenkmoduls 4 und am Boden des Gehäusekörpers 54 des Greifmoduls 6 eingreifen.

Zum Lösen bzw. Zerlegen der in Figur 1 dargestellten Handhabungseinrichtung in ihre einzelnen Module 2, 4, 6 werden die Rasthaken 76, 98 aus ihrer Hintergriffsstellung ausgelenkt. Hierfür kann in die schlitzförmigen Ausnehmungen 108 (Figur 8) zwischen den Rasthaken 76 und dem plattenförmigen Abschnitt des Kopplungselements 12 ein Mittel zum Auslenken der Rasthaken 76 eingeführt werden. Im einfachsten Falle wird ein mehrkantiger Winkel eingesteckt und so verdreht, dass der Schlitz 108 V-förmig geweitet wird.

Wie in den Figuren 8 und 9 desweiteren dargestellt ist, sind in den Kopplungselementen 12 und 14 zu den Seiten hin offene Durchgangsöffnungen 110, 112 vorgesehen, die als Durchführungen für Leitungen dienen können.

## Patentansprüche

1. Handhabungseinrichtung mit mehreren Handhabungsmodulen, wie Greif- (6), Hub- (2) oder Schwenkmodulen (4), die über eine Verbindungsvorrichtung (8, 10) miteinander lösbar verbindbar sind, wobei als Verbindungsvorrichtung (8, 10) ein antriebs- und getriebeloses Kopplungselement (12, 14) vorgesehen ist, **dadurch gekennzeichnet, dass** zum Verbinden zweier Handhabungsmodule (2, 4, 6) das jeweilige Kopplungselement (12, 14) an beiden Handhabungsmodulen (2, 4, 6), die es verbindet, schnappend, rastend und hintergreifend montierbar ist.

2. Handhabungseinrichtung nach Anspruch 1, **dadurch gekennzeichnet, dass** das Kopplungselement (12, 14) plattenförmig ist.

3. Handhabungseinrichtung nach einem der vorstehenden Ansprüche, **dadurch gekennzeichnet, dass** das Kopplungselement (12, 14) aus Kunststoff besteht und ein Spritzgußteil ist.

4. Handhabungseinrichtung nach einem der vorstehenden Ansprüche, **gekennzeichnet durch** in Montagerichtung erstreckte Rasthaken (76, 98) an dem Kopplungselement (12, 14) oder einem Modul (2, 4, 6), die an einem hintergreifbaren Bereich (82, 100, 102) an dem jeweils anderen Teil in Hintergriffsstellung bringbar sind.

5. Handhabungseinrichtung nach Anspruch 4, **dadurch gekennzeichnet, dass** die Rasthaken (76, 98) an dem Kopplungselement (12, 14) vorgesehen sind und sich in zwei entgegengesetzte Richtungen auf die miteinander zu verbindenden Module (2, 4; 4, 6) hin erstrecken.

6. Handhabungseinrichtung nach Anspruch 4 oder 5, **dadurch gekennzeichnet, dass** die Rasthaken (76, 98) leistenförmig über im wesentlichen die gesamte Breite des Kopplungselements (12, 14) erstreckt sind.

7. Handhabungseinrichtung nach Anspruch 4, 5 oder 6, **dadurch gekennzeichnet, dass** die Rasthaken geteilt sind.

8. Handhabungseinrichtung nach einem der vorstehenden Ansprüche, **dadurch gekennzeichnet, dass** das Kopplungselement (12, 14) und das Modul Fixiermittel umfassen, die eine Verdrehsicherung zwischen dem Kopplungselement und dem Modul bilden.

9. Handhabungseinrichtung nach Anspruch 8, **dadurch gekennzeichnet, dass** die Verdrehsicherung von wenigstens einem in Montagerichtung erstreckten Vorsprung (88, 104) und einer an entsprechender Stelle vorgesehenen Ausnehmung (90, 106), in welche der Vorsprung eingreift, gebildet ist.

10. Handhabungseinrichtung nach einem der vorstehenden Ansprüche, **dadurch gekennzeichnet, dass** in dem Kopplungselement (12, 14) und in dem Modul zusätzlich Schraubendurchgangsöffnungen und Gewindeöffnungen vorgesehen sind.

11. Handhabungseinrichtung nach einem der vorstehenden Ansprüche, **dadurch gekennzeichnet, dass** das Kopplungselement (12, 14) Durchgangsöffnungen für Leitungen aufweist.

## Claims

1. Handling device with several manipulation modules, such as gripper modules (6), lifting modules (2) or pivoting modules (4), which are detachably connected together via a connecting device (8, 10), whereby the connecting device (8, 10) is a driven and gearless coupling element (12, 14), **characterised in that** the respective coupling element (12, 14) attached to and connecting both manipulations modules (2, 4, 6) is mounted for snatching, stopping and back-gripping action in order to connect two manipulation modules (2, 4, 6).

2. Handling device according to claim 1, **characterised in that** the coupling element (12, 14) is board shaped.

3. Handling device according to any one of the preceding claims, **characterised in that** the coupling element (12, 14) consists of plastic material and is an injection moulding part.

4. Handling device according to any one of the preceding claims, **characterised in that** snap-fitting members (76, 98) on the coupling element (12, 14) or on a module (2, 4, 6), which can be attached to a back-gripping area (82, 100, 102) in a back-gripping position on the other corresponding part, extend in the direction of assembly.

5. Handling device according to claim 4, **characterised in that** the snap-fitting members (76, 98) are provided on the coupling element (12, 14) and extend in two opposed directions on the modules (2, 4; 4, 6) that are to be connected.

6. Handling device according to claim 4 or 5, **characterised in that** the snap-fitting members (76, 98) extend strip-like over substantially the entire width of the coupling elements (12, 14).

7. Handling device according to claim 4, 5 or 6, **characterised in that** the snap-fitting members are forked.

8. Handling device according to any one of the preceding claims, **characterised in that** the coupling element (12, 14) and the module incorporate fixing means which form an anti-twist mechanism between the coupling element and the module.

9. Handling device according to claim 8, **characterised in that** the anti-twist mechanism comprises at least one nose (88, 104) and a recess (90, 106) that is positioned at an appropriate point, with which the nose engages.

10. Handling device according to any one of the preceding claims, **characterised in that** bolt passageway openings and tap holes are additionally provided in the coupling element (12, 14) and in the module.

11. Handling device according to any one of the preceding claims, **characterised in that** the coupling element (12, 14) exhibits passageway openings for conduits.

## Revendications

1. Dispositif de manutention comportant plusieurs modules de manutention, tels que des modules de préhension (6), de levage (2) ou de pivotement (4), qui sont reliés entre eux de manière amovible par un dispositif de liaison (8, 10), le dispositif de liaison (8, 10) étant prévu sous forme d'élément de couplage (12, 14) sans entraînement et sans engrenage, **caractérisé en ce que**, pour relier deux modules de manutention (2, 4, 6), l'élément de couplage (12, 14) correspondant peut être monté par enclenchement à déclic, par encliquetage contre les deux modules de manutention (2, 4, 6), reliés par ledit élément, en les enserrant par l'arrière.

2. Dispositif de manutention selon la revendication 1, **caractérisé en ce que** l'élément de couplage (12, 14) est formé par une plaque.

3. Dispositif de manutention selon l'une quelconque des revendications précédentes, **caractérisé en ce que** l'élément de couplage (12, 14) est réalisé en matière plastique et est une pièce moulée par injection.

4. Dispositif de manutention selon l'une quelconque des revendications précédentes, **caractérisé par** des crochets d'arrêt (76, 98), qui sont orientés dans le sens du montage au niveau de l'élément de couplage (12, 14) ou d'un module (2, 4, 6), et qui peuvent être amenés en prise par l'arrière contre une zone (82, 100, 102) à saisir par l'arrière au niveau de l'autre partie correspondante.

5. Dispositif de manutention selon la revendication 4, **caractérisé en ce que** les crochets d'arrêt (76, 98) sont prévus au niveau de l'élément de couplage (12, 14) et s'étendent dans deux directions opposées vers les modules (2, 4 ; 4, 6) à assembler l'un à l'autre.

6. Dispositif de manutention selon la revendication 4 ou 5, **caractérisé en ce que** les crochets d'arrêt (76, 98) s'étendent en forme de languettes sensiblement sur toute la largeur de l'élément de couplage (12, 14).

7. Dispositif de manutention selon la revendication 4, 5 ou 6, **caractérisé en ce que** les crochets d'arrêt sont divisés.

8. Dispositif de manutention selon l'une quelconque des revendications précédentes, **caractérisé en ce que** l'élément de couplage (12, 14) et le module comportent des moyens de blocage qui forment une sécurité anti-rotation entre l'élément de couplage et le module.

9. Dispositif de manutention selon la revendication 8, **caractérisé en ce que** la sécurité anti-rotation est formée par au moins une saillie (88, 104), orientée dans le sens du montage, et un évidement (90, 106), prévu dans une zone correspondante et dans lequel s'engage la saillie.

10. Dispositif de manutention selon l'une quelconque des revendications précédentes, **caractérisé en ce qu'**il est prévu, en plus, des trous débouchants pour vis et des orifices taraudés dans l'élément de couplage (12, 14) et dans le module.

11. Dispositif de manutention selon l'une quelconque des revendications précédentes, **caractérisé en ce que** l'élément de couplage (12, 14) comporte des trous débouchants pour câbles.
